# EUROPEAN PATENT SPECIFICATION

(11) **EP 3 234 432 B1**
(45) Date of publication and mention of the grant of the patent: **20.02.2019**
(21) Application number: 15813788.5
(22) Date of filing: 15.12.2015
(51) Int. Cl.: B63B 35/44, B63B 27/34, F16L 37/373, F16L 37/62, F16L 55/10

(54) **COUPLING ASSEMBLY FOR CONVEYING PRESSURIZED GAS WITH EMERGENCY RELEASE SYSTEM**
KUPPLUNGSANORDNUNG ZUR FÖRDERUNG VON DRUCKGAS MIT NOTFALLFREIGABESYSTEM
ENSEMBLE DE COUPLAGE POUR TRANSPORTER DU GAZ PRESSURISÉ AVEC SYSTÈME DE LIBÉRATION D'URGENCE

(30) Priority: 17.12.2014 EP 14198643
(43) Date of publication of application: 25.10.2017
(73) Proprietor: Shell Internationale Research Maatschappij B.V., 2596 HR The Hague (NL)
(72) Inventor: KRUIJER, Alfred, 2288 GS Rijswijk (NL)
(74) Representative: Shell Legal Services IP
(86) International application number: PCT/EP2015/079908
(87) International publication number: WO 2016/096934

(56) References cited:
- EP-A1- 2 383 499
- WO-A2-2009/071591
- GB-A- 2 162 270
- US-A- 4 515 182

## Description

### TECHNICAL FIELD

The present disclosure relates to a coupling assembly for coupling a first gas conduit and a second gas conduit for conveying a pressurized gas stream between a floating structure and another structure. Further provided is a floating structure comprising such a coupling assembly.

### BACKGROUND

The need for transferring pressurized gas between a floating structure and another structure (e.g. a floating, an on-shore or gravity based off-shore structure or a jetty) may for instance arise if one of the structures comprises a gas processing unit, while the other structure contains either a gas consumer, a gas producer, or both.

The floating structure may be a FPSO (floating production, storage and offloading unit), such as a FSRU (floating storage and regasification units) which is arranged to revaporize LNG (liquified natural gas) and produces high pressure natural gas which is transferred to the other structure, such as a pipeline towards an on-shore power plant.

In order to establish a gas connection between the two structures a first gas conduit mounted on the floating structure and a second gas conduit mounted on the other structure are coupled using a coupling device. The coupling device may comprise a collar holding flanges of the first and second gas conduit together. The coupling device is switchable between a closed state and an open state. Both the first and second gas conduit comprise emergency valves which can close the first and second gas conduits.

In case of an emergency, the coupling between the first and second gas conduits needs to be disconnected quickly and safely, for instance because of severe weather or sea conditions, unintended release of the mooring lines or a (imminent) collision with a passing-by ship.

Preferably, the emergency valves should be closed and the trapped high pressure gas between the first and second emergency valves should be vented before opening the coupling device and releasing the gas connection, to prevent uncontrolled separation of the coupling halves and uncontrolled loss of high pressurized gas.

US8,336,579 discloses an emergency disconnection system, comprising a collar for securing two valves together, wherein an actuator is provided which comprises a single rod which is moveable axially over a length of travel, first means for moving the rod over a first portion of its travel to close the two valves and second means for moving the rod over a remaining portion of its travel to open the collar. The first and second means are independently controlled.

WO2009/071591A2 discloses a connector for releasably attaching two hydrocarbon ducts, the connector comprising first and second onnector members, each havinga housing with a fluid passage, a valve rotatably seated in the passage for closing off the fluid passage, drive members attached to a respective valve situated at an outer surface of the housing for rotation of the valves between an open state and a closed state.

GB2162270A discloses an emergency release coupler for releasably coupling together two pipes. The coupler comprises two valves. Each valve comprises a casing housing a pivotally mounted valve member which is movable between closed and open positions.

### BRIEF DESCRIPTION

The apparatus and methods described herein may provide a loading assembly with a more reliable release system for releasing the coupling device.

The term 'comprising' is used in this text to indicate that all the enlisted elements are encompassed without excluding the presence of additional non-named elements.

According to a first aspect there is provided a coupling assembly for coupling a first gas conduit (1) and a second gas conduit (2) for conveying a pressurized gas stream through the first gas conduit (1) and second gas conduit (2) between a floating structure and an other structure, the coupling assembly comprising
- a coupling device (3) arranged for coupling the first gas conduit (1) and the second gas conduit (2), wherein the coupling device (3) is switchable between a closed state and an open state, wherein in the closed state the coupling device (3) couples the first gas conduit (1) and the second gas conduit (2) to create a gas connection to enable conveying a pressurized gas stream , wherein gas present in the gas connection has a gas pressure and wherein in the open state coupling between the first and second gas conduits (1, 2) is released,
- a gas actuator (4) comprising an engagement member (41), wherein the engagement member (41) is moveable between a first and second position, wherein the first position is associated with the closed state of the coupling device (3) and the second position is associated with the open state of the coupling device (3),
characterised in that the gas actuator (4) is in gas communication with the gas connection and wherein the gas pressure in the gas connection forces the engagement member (41) to the first position.

Typically, an emergency valve is provided in the first gas conduit and an emergency valve is provided in the second gas conduit, wherein the gas communication is established between the space in between the emergency valves and and gas actuator.

Such a loading assembly ensures that the coupling device cannot be opened as long as the gas pressure in the gas connection is too high to allow safe opening of the coupling device. This is a very reliable way of preventing uncontrolled release of stored potential energy in the gas that can act as a motive force on the coupling halves due to gas expansion, which could cause a great hazard, such as impact followed by rupture of the gas conduit that remains pressurized potentially leading to fire or explosion. The loading assembly does not rely on pressure sensors and associated data processing. Prevention of unintended opening of the coupling device is not relying on hydraulics, solenoid valves and hydraulic accumulators, which could fail, due to their complexity and sensitivity to water ingress and solids contamination. In particular solenoids are unreliable components in case of a power failure.

The engagement member is arranged to engage via (direct) mechanical interaction with the coupling device. The term mechanical interaction is used to indicate that two parts interact via (direct) mechanical contact, thus not via intermediate hydraulic, pneumatic or electric systems.

The engagement member may be arranged to mechanically force the coupling device to assume the open state. The engagement member may interact with the coupling device in the second position to open the coupling device. The mechanical interaction may for instance comprise pushing open a lock which was locking the coupling device in the closed state.

The second position of the engagement member may be associated with an extended position with respect to a housing, the first position of the engagement member may be associated with a retracted position, or vice versa. The terms extended and retracted are used with respect to the gas actuator, in particular a housing of the gas actuator.

### SHORT DESCRIPTION OF THE DRAWINGS

Embodiments will now be described, by way of example only, with reference to the accompanying schematic drawings in which corresponding reference symbols indicate corresponding parts, and in which:
Fig.'s 1a - 4 schematically show an embodiment in different states.

### DETAILED DESCRIPTION

For the purpose of this description, a single reference number will be assigned to a line as well as a stream carried in that line. Same reference numbers refer to similar components. The person skilled in the art will readily understand that, while the embodiments make reference to one or more specific combinations of features and measures, many of those features and measures are functionally independent from other features and measures such that they can be equally or similarly applied independently in other embodiments or combinations.

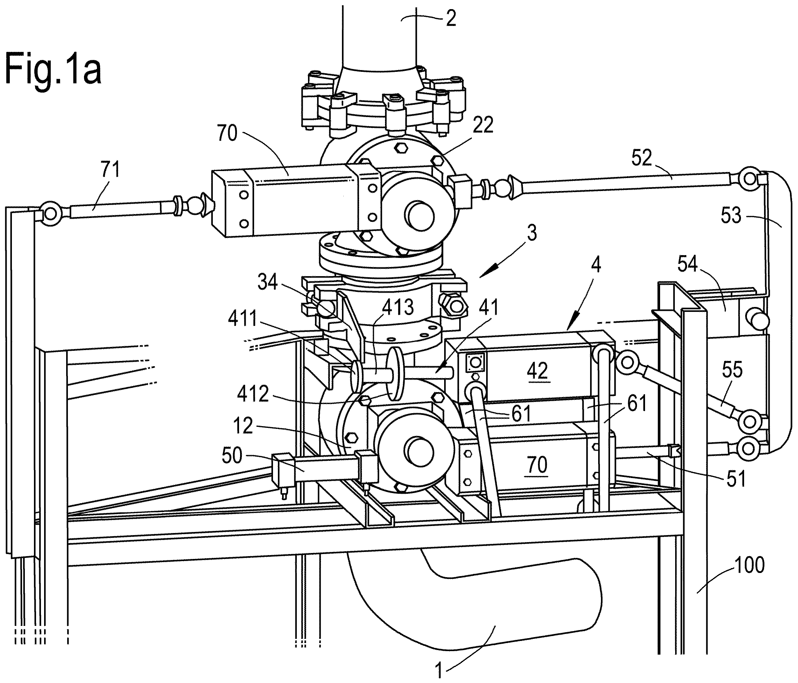

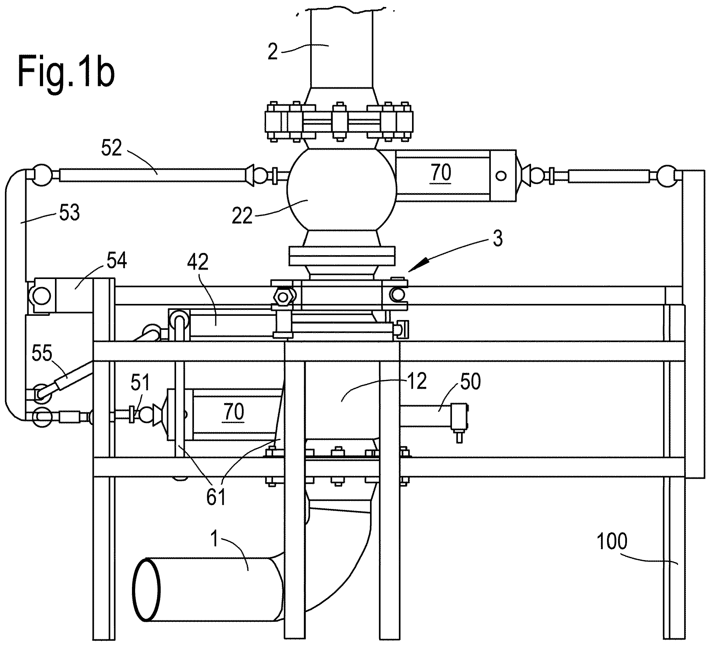

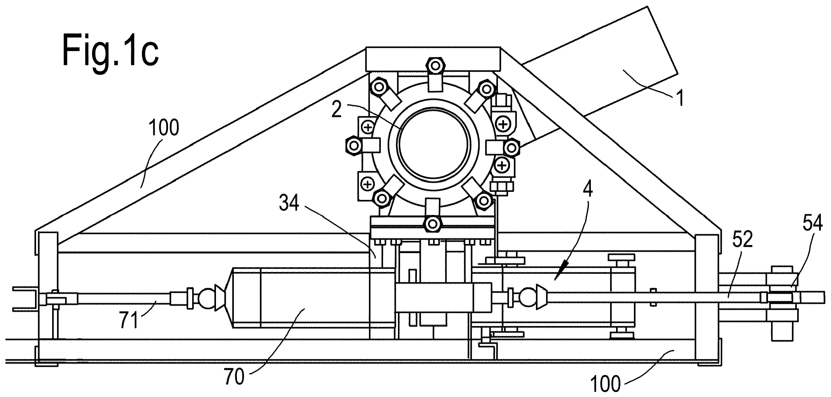

Fig.'s 1a - 1c schematically depict a loading assembly comprising a coupling assembly for conveying a pressurized gas stream between a floating structure and another structure. Fig.'s 1a shows a front view, Fig. 1b shows a rear view and Fig. 1c shows a top view of the same loading assembly.

The structures are not shown, but one structure may be a floating structure, while the other structure may be a floating structure or a non-floating structure, such as a floating, an on-shore or gravity based off-shore structure or a jetty. The pressurized gas stream may travel towards the floating structure or towards the other structure.

Fig.'s 1a - 1c show a first gas conduit 1, typically mounted on the floating structure and a second gas conduit 2 typically mounted on the other structure. Suitably, although this is not a requirement, the first or second gas conduits 1,2 is supported on a loading arm.

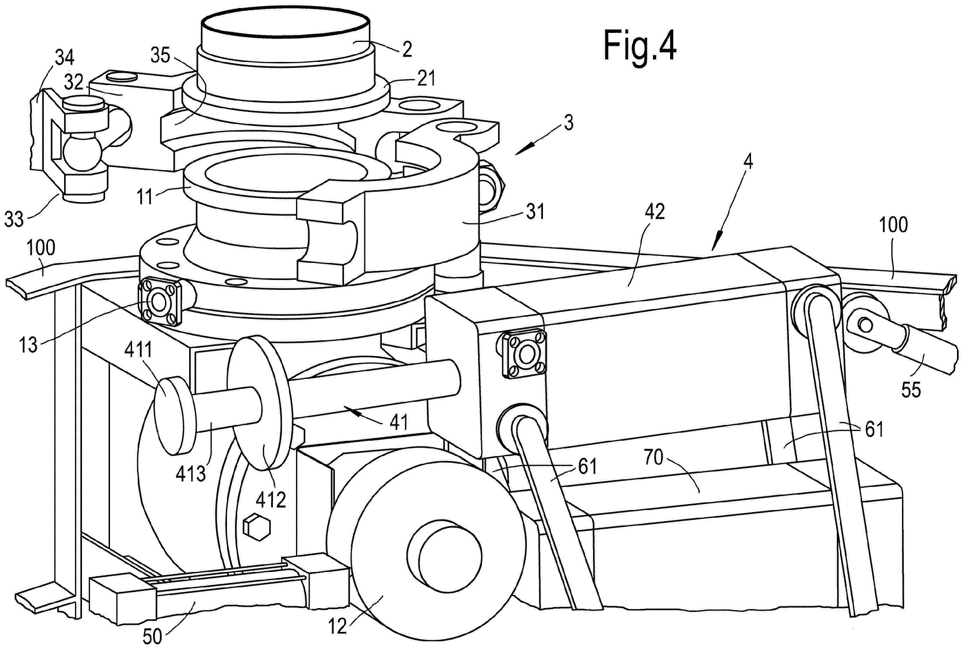

A coupling device 3 is provided to couple the first and second gas conduits 1, 2 to establish a gas connection. The coupling device 3 may have any suitable form, but is shown by way of example as a collar which can hold together end flanges (11, 21, see Fig. 4) of the respective gas conduits 1, 2.

Further provided is a frame 100 to which at least some of the elements as discussed below may be attached. The frame 100 is provided to remove undue forces and moments from the loading assembly. This may be achieved by accommodating forces through guide supports.

The coupling device 3 is switchable between a closed and open state. Fig.'s 1a - 1c show the coupling device 3 in the closed state.

The coupling device 3 comprises a first and second jaw 31, 32 which are held together in the closed state by a lock 33. The inner perimeters of the first and second jaws 31, 32 comprise respective slots 35 (one of which being visible in Fig. 4) to receive the end flanges 11, 21.

The coupling device 3 further comprise a latch 34 connected to the lock 33 to open and close the lock 33.

The conveyed gas has a gas pressure, which is typically much higher than the ambient pressure. The gas pressure of the conveyed gas is typically above 30 bar, for instance above 50 or 80 bar.

Further provided is a gas actuator 4 which comprises an engagement member 41 which can interact with the coupling device 3, in particular with the latch 34 to open the lock 33. In the example shown in the Figures, the engagement member 41 of the gas actuator 4, in particular the second engaging part 412, interacts with the latch 34 of the coupling device 3.

The gas actuator 4 can move the engagement member 41 of the gas actuator 4 between a first and second position.

The gas actuator 4 comprises a housing 42, the engagement member 41 being moveable with respect to the housing 42. The gas actuator 4 may be of a piston-cylinder type in which the housing is or comprises a cylinder and the engagement member 41 is attached to a piston which is moveable within the cylinder under the influence of gas pressure.

The engagement member 41 is moveable between a first position and a second position. The first position is associated with the closed state of the coupling device 3 and the second position is associated with the open state of the coupling device 3. Association between the second position and the open state and optionally between the first position and the closed state, is established by mechanical contact between the engagement member 41 (in particular the second engaging part 412) and the coupling device 3, in particular the latch 34 of the coupling device 3.

In the embodiment shown, the first position can be reached by the engagement member 41 when being retracted with respect to the gas actuator 4 and the second position can be reached by the engagement member 41 when being extended with respect to the gas actuator 4. It will be understood that other embodiments are conceivable in which this is the other way around.

As will be explained in more detail below the engagement member 41 may only be able to reach the first position when the gas actuator 4 is in an disarmed position and may only be able to reach the second position when the gas actuator 4 is in an armed position.

The gas actuator 4 is in gas communication with the gas connection (not shown). This gas communication, which may be established by a conduit or a flexible hose, is used to transfer the gas pressure to the gas actuator 4 and apply a pneumatic force to the engagement member 41 towards the first position. The gas communication will form a connection between the gas actuator 4 and the gas connection in between first and second emergency valve 12, 22 (introduced below). The gas connection may be flexible or articulated as the gas communication as it may not impede movement of the gas actuator between an armed and disarmed position (explained in more detail below).

In case the gas actuator 4 is of piston-cylinder type, one side of the cylinder is in gas communication with the gas connection.

In the first position the engagement member 41 may mechanically engage with the coupling device 3 to prevent the coupling device 3 to assume the open state.

As shown in Fig.'s 1a - 1c, the engagement member 41 of the gas actuator 4 comprises a first engaging part 411 and a second engaging part 412. The first and second engaging part 411, 412 are mounted on an axis 413.

Preferably, in the closed state of the coupling device 3, the latch 34 is in a stable position. However, the latch 34 is close to being meta-stable in order to minimize the force needed to open the clamp.

According to an embodiment, in the first position, the first engaging part 411 of the engagement member 41 prevents the latch 34 of the lock 33 from accidental opening the lock 33.

In the second position the engagement member (41) mechanically forces the coupling device to assume the open state.

In the second position the second engaging part 412 of the engagement member 41 is pushed against the latch 34 of the lock 33 to open the lock 33. This will be explained in more detail below. Once in the open state, the coupling device and the engagement member 41 may no longer touch each other.

The coupling device 3 is biased to assume the open state. This may for instance be done by using spring biased hinges allowing the first and second jaws 31, 32 to rotate and biasing the first and second jaws 31, 32 towards an open state. The lock 33 prevents the first and second jaws 31, 32 from assuming the open state when locked.

Alternatively, the first and second jaws 31, 32 may comprise a tapered inner groove to receive end flanges of the first and second gas conduits 1, 2 matching the tapered inner groove. The tapered inner groove is tapered such that the width of the groove in axial direction decreases in radial direction. This has the effect that when the first and second gas conduits 1, 2 are separated, the jaws 31, 32 of the coupling device 3 are pushed open by the tapered construction.

According to an embodiment the engagement member, when in the first position may be arranged to prevent the coupling device from opening and thereby preventing the coupling device from unintentional opening in situations with high pressure.

As further shown in Fig.'s 1a - 1c, the first gas conduit 1 comprises a first emergency valve 12 and the second gas conduit 2 comprises a second emergency valve 22 and the coupling assemebly comprises one or more actuators 50 to move the first and second emergency valves 12, 22 between an open and closed position.

In the open position the respective gas conduits 1, 2 are open and in the closed position the respective gas conduits 1, 2 are closed. As shown in Fig.'s 1a-1c, a single actuator 50 is present for moving the first and second emergency valves 12, 22 between the open and closed position.

The one or more actuators 50 to operate the first and second emergency valves 12, 22 are preferably, but not necessarily, hydraulic actuators.

The first and second emergency valves 11, 22 are used to close the first and second gas conduits 1, 2 before the coupling device 3 is released. In order to ensure safe opening of the coupling device 3, the emergency valves 12, 22 should be closed before opening the coupling device 3.

Preferably, the first and second emergency valves 12, 22 are positioned close to the respective ends of the first and second gas conduits 1, 2, preferably less than 5 diameters of the gas conduits away from the end.

The first and second emergency valves 12, 22 are arranged to move synchronously, preferably actuated by a single actuator 50. A mechanical link may be provided between the first and second emergency valves 12, 22 to ensure synchronous movement.

In the example shown in Fig.'s 1a - 1c, one hydraulic actuator 50 is provided. The hydraulic actuator 50 is positioned to open and close one emergency valve (e.g. the first emergency valve 12) and a mechanical link, formed by a plurality of rods 51, 52, 53, is provided to link movement of the first and two emergency valves 12, 22 between the open and closed position.

By providing a single hydraulic actuator 50 to actuate both the first and second emergency valves 12, 22, there is no need to supply a hydraulic actuator on both the floating structure and the other structure. Providing a hydraulic actuator on the floating structure, the need for a hydraulic actuator on the other structure is omitted. Consequently, there is no need for hydraulic lines to run along the loading arm and the risk of hydraulic oil leakage is reduced.

The mechanical link may be formed by a plurality of rods coupled by rotatable connections.

As shown in Fig.'s 1a-1c, a first rod 51 is with a first end connected to the hydraulic actuator 50 used to operate the first emergency valve 12. The first rod 51 is substantially in line with the stroke of the hydraulic actuator 50.

A second rod 52 is with one end connected to the second emergency valve 22. The second rod 52 is substantially parallel to the first rod 51.

A third rod 53 connects the other ends of the first and second rods 51, 52.

In the example shown in Fig.'s 1a - 1c, the third rod 53 is orientated substantially perpendicular with respect to the first and second rods 51, 52. The third rod 53 is rotatable and connected to the frame 100 via a hinge 54.

Consequently, the first and second emergency valves 12, 22 move synchronously.

The mechanical link between the first and second emergency valves 12, 22 is releasable to allow moving the first and second gas conduits 1, 2 away from each other after the coupling device 3 has assumed the open state. Preferably, a releasable connection is provided between the mechanical link and the second emergency valve 22.

The gas actuator 4 is moveable between an armed position and a disarmed position, wherein in the disarmed position the engagement member 41 is without reach of the second position and wherein in the armed position the engagement member 41 is within reach of the second position.

The gas actuator 4 is moveable as a whole between the armed and disarmed position. The engagement member 41 is moveable independently from the movement of the gas actuator 4 as a whole.

The gas actuator 4 is mounted in a moveable manner. As shown in Fig.'s 1a - 1c, the gas actuator 4 is mounted to the frame 100 by means of a plurality of supports, for instance embodied as rotatable rods 61, allowing the gas actuator to move between the armed and the disarmed position.

Alternatively (not shown), the gas actuator 4 may be slideably positioned on a rail assembly. The rail assembly allows the gas actuator 4 to move between the armed and disarmed position.

The coupling assembly comprises a mechanical link to link movement of the first and second emergency valves 12, 22 from the open to the closed position to movement of the gas actuator from the disarmed to the armed position.

This mechanical link ensures that the gas actuator 4 moves from the disarmed to the armed position when the emergency valves 12, 22 are closed. The mechanical link is provided such that the gas actuator 4 reaches the armed position only when the emergency valves 12, 22 are in the closed position.

Fig.'s 1a - 1c further show an embodiment of such a mechanical link, formed by a rod 55 which is with one end rotatably connected to the third rod 53 and with the other end connected to the gas actuator 4. Rod 55 transforms rotational movement of third rod 53 about hinge 54 described above into movement of the gas actuator 4 from the disarmed to the armed position and vice versa.

Based on the above it is clear that four positions of the engagement member 41 can be identified:

| | **Disarmed** | **Armed** |
|---|---|---|
| **High gas pressure** | First position (associated with the closed position) | Intermediate position A |
| **Low gas pressure** | Intermediate position B | Second position (associated with the open position) |

So, when the gas actuator 4 is positioned in the disarmed position (emergency valves being open), the engagement member 41 is unable to reach the second position and is thus unable to open the coupling device 3.

Also, when the gas pressure is high (i.e. above the pneumatic threshold), the engagement member 41 is unable to reach the second position and is thus unable to open the coupling device 3. Hereby, unwanted opening of the coupling device 3 is prevented.

Only when the gas actuator 4 is positioned in the armed position (corresponding with closed emergency valves 12, 22) and the gas pressure is low, the engagement member 41 reaches the second position and is thus able to open the coupling device 3.

In the intermediate positions A and B the engagement member 41 may be free of contact with the coupling device 3. Intermediate positions A and B are typically different position with respect to the frame, but may also coincide in some embodiments.

Switching the coupling device 3 from the closed to the open state can be done in two ways: via intermediate position A or via intermediate position B. Both procedures will be explained in more detail below.

According to an embodiment the gas actuator 4 is biased towards the second position.

The gas actuator 4 may comprise a biasing element exerting a biasing force to the engagement member, forcing the engagement member towards the second position. The biasing element may for instance be a spring (not shown) pushing the engagement member 41 of the gas actuator 4 towards the second position. The gas actuator 4 is thus in fact biased towards the open state of the coupling device 3.

As will be explained in more detail below, the biasing force itself is not necessarily sufficient for reaching the second position, as this also requires the gas actuator 4 to be in the armed position.

In case the gas actuator 4 is of piston-cylinder type, one side of the cylinder is in gas communication with the gas connection and the other side of the cylinder comprises the biasing element, which may be a spring, the one side and the other side being separated by the moveable piston.

The gas pressure, which is transferred to the gas actuator 4, is used to counteract the biasing force. The biasing force is chosen such that the gas pressure can overcome the biasing force as long as the gas pressure is too high, i.e. above a predetermined threshold pressure, to allow safe opening the coupling device 3. Once the gas pressure drops under the predetermined pressure threshold, the biasing force overcomes the force exerted by the gas pressure allowing the engagement member 41 to move towards the second position (extended position in the example depicted). When in addition the emergency valves are closed, the engagement member 41 will reach the secon position and push the latch 34 of the lock 33 to open the lock 33.

The pressure threshold is typically close to the ambient pressure, for instance 1.1 bar.

The biasing of the gas actuator 4 towards the second position ensures that the coupling device 3 is released when the emergency valves 12, 22 are closed and the pressure drops below the predetermined threshold pressure to guarantee a quick and reliable release of the coupling device 3, independent of further power sources or the like.

The loading assembly comprises one or two venting holesto vent the gas conduits 1, 2 before releasing the coupling device 3. One or more venting holes are present in between the first and second emergency valves 12, 22. One venting hole 13 is shown by way of example in Fig. 4.

The venting holes are in fluid connection with a venting conduit via which the gas connection can be vented, i.e. allowing the gas to escape from the gas connection to a safe location and allowing the pressure to drop to a level below the pneumatic threshold value.

According to an embodiment the first and optionally second emergency valve are biased towards the closed position. The emergency valves thus each comprise a biasing member 70, such as a spring. The first and second emergency valves 12, 22 are thus fail-to-close emergence valves. The one or more (hydraulic) actuators 50 are provided to open the emergency valves by overcoming the biasing force.

Typically, the first gas conduit 1, the first emergency valve 12, the gas actuator 4, actuator 50, the rotatable rods 61 and the frame are associated with and mounted on the floating structure, while the second gas conduit 2 is associated with the other structure, such as a floating, an on-shore or gravity based off-shore structure or a jetty.Such an arrangement reduces the weight on a loading arm used to manoeuvre the second gas conduit 2 to a position in which it can be connected to the first gas conduit 1.

According to an embodiment the gas actuator 4, the one or more actuators 50, the mechanical links 51, 52, 53, 54, 55 are all provided in a single plane. This reduces the risk of mechanical damage and failures. Also, this protects the coupling device 3 from bending moments and torsional moments. All forces exerted are now in one plane, resulting in reaction forces only i.e. no bending or torsional moments.

According to an embodiment there is provided a floating structure, in particular a floating structure arranged to revaporize LNG, the floating structure comprising a first gas conduit 1 and a coupling assembly for coupling the first gas conduit 1 to a second gas conduit 2 for conveying a pressurized gas stream through the first gas conduit 1 and second gas conduit 2, the coupling assembly comprising
- a coupling device 3 arranged for coupling the first gas conduit 1 and the second gas conduit 2, wherein the coupling device 3 is switchable between a closed state and an open state, wherein in the closed state the coupling device 3 couples the first gas conduit 1 and the second gas conduit 2 to create a gas connection to enable conveying a pressurized gas stream , wherein gas present in the gas connection has a gas pressure and wherein in the open state coupling between the first and second gas conduits 1, 2 is released,
- a gas actuator 4 comprising an engagement member 41, wherein the engagement member 41 is moveable between a first and second position, wherein the first position is associated with the closed state of the coupling device 3 and the second position is associated with the open state of the coupling device 3, wherein the gas actuator 4 is or can be brought in gas communication with the gas connection and the gas pressure forces the engagement member 41 to the first position.

The first gas conduit 1 is in fluid communication or can be brought in fluid communication with a revaporizing equipment.

The functioning of the loading assembly, in particular releasing the coupling between the first and second gas conduits 1, 2 will be explained.

Fig.'s 1a - 1c show the loading assembly in use during conveying pressurized gas, with the coupling device 3 in a closed state, the emergency valves 12, 22 in an open position, the gas actuator 4 in a disarmed position, and the engagement member 41 in the first position.

In case switching of the coupling device to the open state is initiated, the emergency valves 12, 22 are closed using the one or more actuators 50.

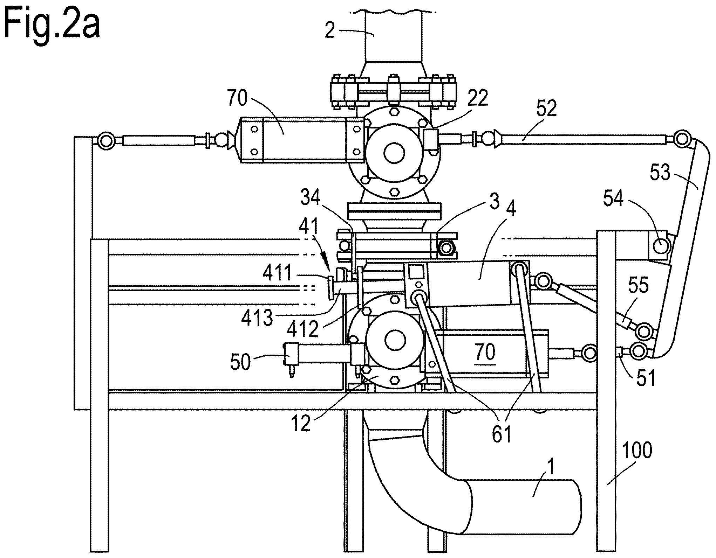

As a result, the movement associated with closing the emergency valves 12, 22 is transferred via rods 51, 52, 53, hinge 54 and rod 55, resulting in the gas actuator 4 moving from the disarmed to the armed position. The result of this is shown in Fig. 2a.

As shown in Fig. 2a, the second engaging part 412 of the gas actuator 4 abuts or is positioned close to the latch 34 connected to the lock 33. The engagement member 41 is now in intermediate position A.

In a next step, the volume in between the first and second emergency valves 12, 22 is vented resulting in a drop in pressure. Venting is done via the one or more venting holes present in between the first and second emergency valves 12, 22 as described above.

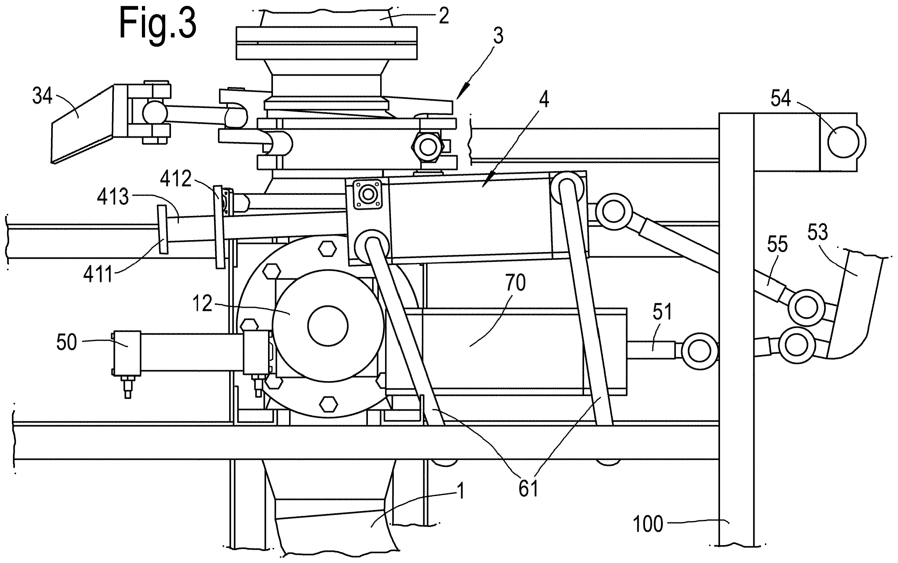

At the time the gas pressure drops below the predetermined pneumatic threshold value, the biasing force in the gas actuator 4 pushes the engagement member 41 to the second position, thereby pushing against the latch 34 connected to the lock 33 which opens the lock 33. This situation is shown in Fig. 3.

The coupling device 3 is preferably biased to assume the open state to ensure that the coupling device 3 assumes the open state after the lock 33 has been opened.

In a next step, the first and second gas conduits 1, 2 are moved away from each other, for instance to allow the floating structure to sail away. This is depicted in Fig. 4.

According to an alternative embodiment, the order of the steps is different in that the pressure is reduced before closing the emergency valves 12, 22. This situation may for instance occur in an unusual situation where the pressure between the emergency valves 12, 22 is low because the entire gas connection has been vented or pressure loss occurred as a result of leakage.

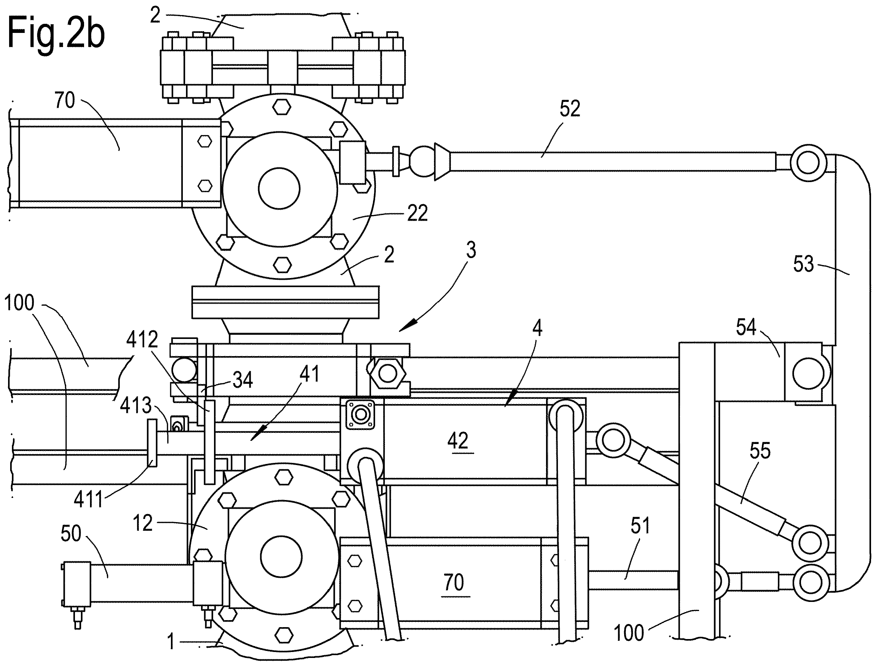

In this case, the engagement member 41 moves towards the second position with respect to the housing 42. In the situation depicted in the figures this corresponds to the extended position. As the gas actuator 4 is still in the disarmed position (the emergency valves still being open), this corresponds to intermediate position B. This situation is shown in Fig. 2b.

Next, the emergency valves 12, 22 are closed using the one or more actuators 50. As a result, similar to above, the movement associated with closing the emergency valves 12, 22 is transferred via rods 51, 52, 53 and hinge 54 and results in the gas actuator 4 moving from the disarmed to the armed position, pushing the engagement member 41 to the second position, thereby pushing against the latch 34 connected to the lock 33 which opens the lock 33. This situation is shown in Fig. 3.

Fig.'s 1a-1c, 3, 4 and 5 apply equally to this alternative embodiment. Instead of Fig. 2a, Fig. 2b, showing the engagement member in intermediate position B applies.

The person skilled in the art will understand that the present invention can be carried out in many various ways without departing from the scope of the appended claims.

## Claims

1. A coupling assembly for coupling a first gas conduit (1) and a second gas conduit (2) for conveying a pressurized gas stream through the first gas conduit (1) and second gas conduit (2) between a floating structure and an other structure, the coupling assembly comprising
- a coupling device (3) arranged for coupling the first gas conduit (1) and the second gas conduit (2), wherein the coupling device (3) is switchable between a closed state and an open state, wherein in the closed state the coupling device (3) couples the first gas conduit (1) and the second gas conduit (2) to create a gas connection to enable conveying a pressurized gas stream, wherein gas present in the gas connection has a gas pressure and wherein in the open state coupling between the first and second gas conduits (1, 2) is released,
- a gas actuator (4) comprising an engagement member (41), wherein the engagement member (41) is moveable between a first position and second position, wherein the first position is associated with the closed state of the coupling device (3) and the second position is associated with the open state of the coupling device (3),
**characterised in that** the gas actuator (4) is in gas communication with the gas connection and wherein the gas pressure in the gas connection forces the engagement member (41) to the first position.

2. Coupling assembly according to claim 1, wherein in the second position the engagement member (41) mechanically forces the coupling device to assume the open state.

3. Coupling assembly according to any one of the preceding claims, wherein the first gas conduit (1) comprises a first emergency valve (12) and the second gas conduit (2) comprises a second emergency valve (22) and the coupling assembly comprises one or more actuators (50) to move the first and second emergency valves (12, 22) between an open position and closed position.

4. Coupling assembly according to any one of the preceding claims, wherein the first and second emergency valves (12, 22) are arranged to move synchronously, preferably actuated by a single actuator (50).

5. Coupling assembly according to any one of the preceding claims, wherein the gas actuator (4) is moveable between an armed position and a disarmed position, wherein in the disarmed position the engagement member (41) is without reach of the second position and wherein in the armed position the engagement member (41) is within reach of the second position.

6. Coupling assembly according to any one of the preceding claims, wherein the coupling assembly comprises a mechanical link to link movement of the first and second emergency valves (12, 22) from the open position to the closed position to movement of the gas actuator from the disarmed position to the armed position.

7. Coupling assembly according to any one of the preceding claims, wherein the gas actuator (4) is biased towards the second position.

8. Coupling assembly according to any one of the preceding claims, wherein the first emergency valve (12) and optionally the second emergency valve (22) are biased towards the closed position.

9. Coupling assembly according to any one of the preceding claims, wherein the gas actuator (4), the one or more actuators (50), the mechanical link (51, 52, 53, 54, 55) are all provided in a single plane.

10. A floating structure comprising a first gas conduit (1) and a coupling assembly according to claim 1.

11. The floating structure of claim 10, the floating structure being a floating structure arranged to revaporize LNG.

## Patentansprüche

1. Kupplungsanordnung zum Kuppeln einer ersten Gasleitung (1) und einer zweiten Gasleitung (2) zum Transportieren eines Druckgasstroms durch die erste Gasleitung (1) und die zweite Gasleitung (2) zwischen einer schwimmenden Struktur und einer anderen Struktur, wobei die Kupplungsanordnung umfasst:
- eine Kupplungsvorrichtung (3), die für das Kuppeln der ersten Gasleitung (1) und der zweiten Gasleitung (2) eingerichtet ist, wobei die Kupplungsvorrichtung (3) zwischen einem geschlossenen Zustand und einem geöffneten Zustand umschaltbar ist, wobei die Kupplungsvorrichtung (3) im geschlossenen Zustand die erste Gasleitung (1) und die zweite Gasleitung (2) kuppelt, um einen Gasanschluss herzustellen, sodass ein Transportieren eines Druckgasstroms ermöglicht wird, wobei das im Gasanschluss vorhandene Gas einen Gasdruck aufweist und wobei im geöffneten Zustand die Kupplung zwischen der ersten und der zweiten Gasleitung (1, 2) gelöst ist,
- ein Gas-Betätigungsorgan (4), der ein Eingriffselement (41) umfasst, wobei das Eingriffselement (41) zwischen einer ersten Stellung und einer zweiten Stellung beweglich ist, wobei die erste Stellung dem geschlossenen Zustand der Kupplungsvorrichtung (3) zugeordnet ist und die zweite Stellung dem geöffneten Zustand der Kupplungsvorrichtung (3) zugeordnet ist,
**dadurch gekennzeichnet, dass** das Gas-Betätigungsorgan (4) mit dem Gasanschluss in Gasverbindung steht und wobei der Gasdruck im Gasanschluss das Eingriffselement (41) in die erste Stellung treibt.

2. Kupplungsanordnung nach Anspruch 1, wobei das Eingriffselement (41) in der zweiten Stellung die Kupplungsvorrichtung mechanisch zwingt, den geöffneten Zustand anzunehmen.

3. Kupplungsanordnung nach einem der vorhergehenden Ansprüche, wobei die erste Gasleitung (1) ein erstes Notventil (12) umfasst und die zweite Gasleitung (2) ein zweites Notventil (22) umfasst und die Kupplungsanordnung ein oder mehrere Betätigungsorgane (50) umfasst, um das erste und zweite Notfallventil (12, 22) zwischen einer geöffneten Stellung und einer geschlossenen Stellung zu bewegen.

4. Kupplungsanordnung nach einem der vorhergehenden Ansprüche, wobei das erste und zweite Notventil (12, 22) dafür eingerichtet sind, sich vorzugsweise bei Betätigung mittels eines einzigen Betätigungsorgans (50) synchron zu bewegen.

5. Kupplungsanordnung nach einem der vorhergehenden Ansprüche, wobei das Gas-Betätigungsorgan (4) zwischen einer entsicherten Stellung und einer gesicherten Stellung beweglich ist, wobei in der gesicherten Stellung das Eingriffselement (41) die zweite Stellung nicht erreichen kann und wobei in der entsicherten Stellung das Eingriffselement (41) die zweite Stellung erreichen kann.

6. Kupplungsanordnung nach einem der vorhergehenden Ansprüche, wobei die Kupplungsanordnung eine mechanische Verbindung umfasst, um die Bewegung des ersten und des zweiten Notventils (12, 22) aus der geöffneten Stellung in die geschlossene Stellung mit der Bewegung des Gas-Betätigungsorgans aus der gesicherten Stellung in die entsicherte Stellung zu verbinden.

7. Kupplungsanordnung nach einem der vorhergehenden Ansprüche, wobei das Gas-Betätigungsorgan (4) zur zweiten Stellung hin vorbelastet ist.

8. Kupplungsanordnung nach einem der vorhergehenden Ansprüche, wobei das erste Notventil (12) und wahlweise das zweite Notventil (22) zur geschlossenen Stellung hin vorgespannt sind.

9. Kupplungsanordnung nach einem der vorhergehenden Ansprüche, wobei das Gas-Betätigungsorgan (4), das eine oder die mehreren Betätigungsorgane (50) und die mechanische Verbindung (51, 52, 53, 54, 55) alle in einer einzigen Ebene bereitgestellt sind.

10. Schwimmende Struktur, umfassend eine erste Gasleitung (1) und eine Kupplungsanordnung nach Anspruch 1.

11. Schwimmende Struktur nach Anspruch 10, wobei die schwimmende Struktur eine schwimmende Struktur ist, die dafür eingerichtet ist, Flüssigerdgas wieder zu verdampfen.

## Revendications

1. Ensemble d'accouplement permettant de coupler une première conduite de gaz (1) et une seconde conduite de gaz (2) pour transporter un flux de gaz pressurisé à travers la première conduite de gaz (1) et la seconde conduite de gaz (2) entre une structure flottante et une autre structure, l'ensemble d'accouplement comprenant
- un dispositif d'accouplement (3) conçu pour coupler la première conduite de gaz (1) et la seconde conduite de gaz (2), le dispositif d'accouplement (3) étant commutable entre un état fermé et un état ouvert, dans lequel, à l'état fermé, le dispositif d'accouplement (3) accouple la première conduite de gaz (1) et la seconde conduite de gaz (2) pour créer un raccord de gaz afin de permettre le transport d'un flux de gaz pressurisé, le gaz présent dans le raccord de gaz présentant une pression de gaz et dans lequel, à l'état ouvert, l'accouplement entre les première et seconde conduites de gaz (1, 2) est libéré,
- un actionneur à gaz (4) comprenant un élément de mise en prise (41), l'élément de mise en prise (41) pouvant passer entre une première position et une seconde position, la première position étant associée à l'état fermé du dispositif d'accouplement (3) et la seconde position étant associée à l'état ouvert du dispositif daccouplement (3),
**caractérisé en ce que** l'actionneur à gaz (4) est en communication gazeuse avec le raccord de gaz et dans lequel la pression de gaz dans le raccord de gaz force l'élément de mise en prise (41) à venir dans la première position.

2. Ensemble d'accouplement selon la revendication 1, dans lequel, dans la seconde position, l'élément de mise en prise (41) oblige mécaniquement le dispositif d'accouplement à adopter l'état ouvert.

3. Ensemble d'accouplement selon l'une quelconque des revendications précédentes, dans lequel la première conduite de gaz (1) comprend une première soupape d'urgence (12) et où la seconde conduite de gaz (2) comprend une seconde soupape d'urgence (22) et où l'ensemble d'accouplement comprend au moins un actionneur (50) permettant de faire passer les première et seconde soupapes d'urgence (12, 22) entre une position ouverte et une position fermée.

4. Ensemble d'accouplement selon l'une quelconque des revendications précédentes, dans lequel les première et seconde soupapes d'urgence (12, 22) sont conçues pour agir de manière synchrone, étant de préférence actionnées par un seul actionneur (50).

5. Ensemble d'accouplement selon l'une quelconque des revendications précédentes, dans lequel l'actionneur à gaz (4) peut passer entre une position armée et une position désarmée, dans lequel, dans la position désarmée, l'élément de mise en prise (41) est hors de portée de la seconde position et dans lequel, en position armée, l'élément de mise en prise (41) est à portée de la seconde position.

6. Ensemble d'accouplement selon l'une quelconque des revendications précédentes, dans lequel l'ensemble d'accouplement comprend une liaison mécanique permettant de relier le mouvement des première et seconde soupapes d'urgence (12, 22) de la position ouverte à la position fermée au mouvement de l'actionneur à gaz, de la position désarmée à la position armée.

7. Ensemble d'accouplement selon l'une quelconque des revendications précédentes, dans lequel l'actionneur à gaz (4) est sollicité vers la seconde position.

8. Ensemble d'accouplement selon l'une quelconque des revendications précédentes, dans lequel la première soupape d'urgence (12) et facultativement la seconde soupape d'urgence (22) sont sollicitées vers la position fermée.

9. Ensemble d'accouplement selon l'une quelconque des revendications précédentes, dans lequel l'actionneur à gaz (4), l'au moins un actionneur (50), la liaison mécanique (51, 52, 53, 54, 55) sont tous disposés dans un seul plan.

10. Structure flottante comprenant une première conduite de gaz (1) et un ensemble d'accouplement selon la revendication 1.

11. Structure flottante selon la revendication 10, la structure flottante étant une structure flottante conçue pour revaporiser le GNL.
